# FASCICULE DE BREVET EUROPEEN

(11) **EP 4 375 518 B1**
(45) Date de publication et mention de la délivrance du brevet: **10.09.2025**
(21) Numéro de dépôt: 23211259.9
(22) Date de dépôt: 21.11.2023
(51) Int. Cl.: F16B 2/24, F16B 5/06, F16B 21/07

(54) **DISPOSITIF DE FIXATION**
BEFESTIGUNGSVORRICHTUNG
FIXING DEVICE

(30) Priorité: 25.11.2022 FR 2212322
(43) Date de publication de la demande: 29.05.2024
(73) Titulaire: A. Raymond et Cie, 38000 Grenoble (FR)
(72) Inventeur: BRICHET-BILLET, Etienne, 38000 GRENOBLE (FR)
(74) Mandataire: Ipside

(56) Documents cités:
- DE-B4- 102017 001 124
- US-A- 3 864 789
- US-B2- 7 096 638

## Description

### Domaine technique de l'invention

La présente invention concerne un dispositif de fixation, notamment un clip démontable avec rattrapage de jeu pour fixer un premier support sur un second support. La présente invention concerne également un ensemble comportant un tel dispositif de fixation.

### Technique antérieure

Il est connu que dans les clips sont utilisés pour fixer un premier élément à un second élément.

On connaît de l'état technique ces types de produits par exemple décrit dans le document US 5879101. Le clip divulgué comporte une tête ainsi qu'une pointe et est pourvu d'un premier côté et d'un second côté opposé au premier côté. Les côtés opposés s'étendent de la tête à la pointe et ont un profil en forme de champignon. La tête comporte deux ailes recourbées qui maintiennent fermement le clip dans l'ouverture d'un élément et le précontraignent. Les extrémités des ailes sont conçues pour être arrondies. Or il n'est pas prévu que le clip comporte de bras d'arrachement. Dans la fixation avec ce clip, un support inférieur serait également nécessaire. En plus, il est préconisé un assemblage latéral du clip sur un support. Enfin, la compensation de jeu tridimensionnelle est absente.

US 3 864 789 A divulgue une agrafe avec une boucle recourbée en U, comprenant deux branches et une anse qui relie les deux branches. Dans les branches sont découpées des pattes d'appui qui font saillie obliquement vers l'extérieur. Les branches se terminent par des bras élastiques qui sont écartés vers l'extérieur. Des bras d'appui sont découpés dans les bras élastiques.

### Exposé de l'invention

La présente invention vise à remédier à ces inconvénients, en proposant un dispositif de fixation, pour fixer une première structure ayant un trou sur une deuxième structure ayant un trou, qui permet d'avoir une fixation démontable avec rattrapage de jeu. La présente invention concerne également un ensemble comportant un tel dispositif de fixation.

À cet effet, la présente invention concerne un dispositif de fixation qui comporte une première agrafe, dite agrafe de tension, et une deuxième agrafe, dite agrafe d'arrachement, disposées respectivement sur deux plans parallèles,
- l'agrafe de tension comporte deux sections de tension opposées et deux ailes, le dispositif de fixation présente essentiellement une forme de V avec les sections de tension,
   - chaque section de tension comporte une portion de pliage,
   - chaque aile comporte une section de liaison permettant un débattement angulaire et/ou déversement et une section d'extrémité,
      ∘ chaque section de liaison comporte une languette , de sorte à pouvoir retenir la deuxième structure entre les languettes et les sections d'extrémité,
- l'agrafe d'arrachement comporte deux bras opposés,
   - les deux bras comportent chacun une section d'engagement, et la section d'engagement étant apte à s'engager dans la première structure.

Avantageusement, la section de liaison permet un débattement angulaire et/ou déversement de l'agrafe de tension lorsque le dispositif de fixation est monté sur une structure ayant une ouverture, renforçant ainsi la robustesse du dispositif.

Dans un mode de réalisation, le dispositif de fixation présente les caractéristiques suivantes :
- chaque section de tension s'étend dans une première direction d'un axe longitudinal du dispositif de fixation à partir d'une portion centrale, et
- chaque section de tension s'étend vers l'extérieur à partir de l'axe longitudinal et après vers l'axe longitudinal, formant ladite portion de pliage de la section de tension.

Dans un mode de réalisation, le dispositif de fixation présente les caractéristiques suivantes :
- les deux ailes s'étendent, à partir des extrémités des sections de tension, l'une par rapport à l'autre en s'éloignant de l'axe longitudinal, et
- la section d'extrémité s'étend dans la première direction, la section de liaison s'étend dans une direction inverse à la première direction et relie la section de tension et la section d'extrémité.

Dans un mode de réalisation, la section d'engagement s'étend vers l'extérieur à partir de l'axe longitudinal et après vers l'axe longitudinal, formant une portion de pliage.

Dans un mode de réalisation, le dispositif de fixation présente les caractéristiques suivantes :
- les deux bras de l'agrafe d'arrachement opposés s'étendent dans la première direction à partir de la portion centrale,
- la section d'engagement est disposée plus loin de l'axe longitudinal par rapport aux sections de tension.

Avantageusement, ceci permet de garantir et ajuster l'effort de tension et d'arrachement par l'agrafe d'arrachement, notamment entre le dispositif de fixation et la première structure. De plus, le dispositif de fixation permet d'avoir un assemblage démontable de la première structure.

Dans un mode de réalisation, chaque bras s'étend ensuite vers l'extérieur à partir de l'axe longitudinal, formant une portion de pliage.

Dans un mode de réalisation, en état libre la portion de pliage de la section d'engagement vient en butée sur la section d'extrémité.

Avantageusement, ceci permet d'éviter l'emmêlage des clips entre eux en état libre.

Dans un mode de réalisation, la section de liaison permet un débattement angulaire/déversement du dispositif de fixation suivant un axe de flexion et/ou autour un axe perpendiculaire à un plan contenant l'agrafe de tension lorsqu'il est monté sur la deuxième structure.

Dans un mode de réalisation, le dispositif de fixation est essentiellement symétrique par rapport à un plan contenant l'axe longitudinal.

Avantageusement, la force d'introduction/arrachement du dispositif de fixation vis-à-vis des structures est équilibrée sur les deux côtés du dispositif de fixation.

Dans un mode de réalisation, le dispositif de fixation comporte une deuxième agrafe de tension, l'agrafe d'arrachement se trouvant entre les deux agrafes de tension.

Avantageusement, ceci permet avantageusement d'augmenter l'effort de résistance.

Dans un mode de réalisation, les deux agrafes de tension sont reliées par les ailes de même côté.

Avantageusement, ceci permet d'avoir une force de résistance du composant accrue.

Dans un mode de réalisation, les sections de tension sont solidarisées avant de s'étendre en s'éloignant de l'axe longitudinal, de sorte que les sections de tension et la portion centrale forment une forme fermée et concave.

Avantageusement, l'agrafe de tension présente une forme ferme et ceci permet de garder l'énergie de déformation et de garantir une tension d'assemblage. De plus, ceci permet d'éviter l'emmêlage des clips entre elles et garantir la géométrie des pièces en limitant la déformation. En outre, ceci permet de dissocier les fonctions de clippage avec les deux structures à fixer.

Dans un mode de réalisation, les sections de tension sont solidarisées par des plis de fermeture.

Dans un mode de réalisation, le dispositif de fixation est obtenu par pliage et/ou découpage à partir d'un élément monobloc de bande élastique. Avantageusement, ceci permet d'avoir un clip de robustesse.

Dans un mode de réalisation, le dispositif de fixation comporte en outre des moyens de verrouillage pour solidariser les sections de tension.

Selon un deuxième aspect de l'invention, l'invention concerne un ensemble comportant une première structure ayant une première ouverture et une deuxième structure ayant une deuxième ouverture, d'où
- la première structure est fixée à la deuxième structure au moyen d'un dispositif de fixation selon la présente invention,
- l'agrafe d'arrachement est disposée à travers l'ouverture de la première structure de manière à ce que les deux bras sont engagés dans la première structure,
- les deux ailes sont disposées à travers l'ouverture de la deuxième structure de manière à ce que la deuxième structure est retenue entre les languettes et les sections d'extrémité.

Selon un troisième aspect de l'invention, l'invention concerne un ensemble comportant une deuxième structure ayant une deuxième ouverture et un dispositif de fixation selon la présente invention, dans lequel les deux ailes sont disposées à travers la deuxième structure de manière à ce que la deuxième structure est retenue entre les languettes et les sections d'extrémité.

### Brève description des figures

D'autres avantages, buts et caractéristiques de la présente invention ressortent de la description qui suit faite, dans un but explicatif et nullement limitatif, en regard des dessins annexés, dans lesquels :
la Figure 1 représente une vue en perspective d'un dispositif de fixation selon un mode de réalisation de la présente invention ;
la Figure 2 représente une autre vue en perspective d'un dispositif de fixation selon un mode de réalisation de la présente invention ;
la Figure 3 représente une troisième vue en perspective d'un dispositif de fixation selon un mode de réalisation de la présente invention ;
la Figure 4 représente une vue en coupe d'un dispositif de fixation qui fixe une première structure sur une deuxième structure selon un mode de réalisation de la présente invention ;
la Figure 5 représente une vue en coupe d'un dispositif de fixation qui fixe une première structure sur une deuxième structure selon un mode de réalisation de la présente invention ;
la Figure 6 représente une vue de dessus du dispositif de fixation de la Figure 5 ;
la Figure 7 représente une vue en perspective d'un dispositif de fixation selon un mode de réalisation de la présente invention ;
la Figure 8 représente une vue de côté d'un dispositif de fixation selon un mode de réalisation de la présente invention ;
la Figure 9 représente une vue de côté d'un dispositif de fixation qui fixe une première structure sur une deuxième structure selon un mode de réalisation de la présente invention.

### Description des modes de réalisation

Les différentes figures ainsi que les éléments d'une même figure ne sont pas nécessairement représentées à la même échelle. Sur l'ensemble des figures, les éléments identiques portent la même référence numérique.

La terminologie employée dans la présente description ne doit en aucun cas être interprétée de manière limitative ou restrictive, simplement parce qu'elle est employée en conjonction avec une description détaillée de certains modes de réalisation de l'invention.

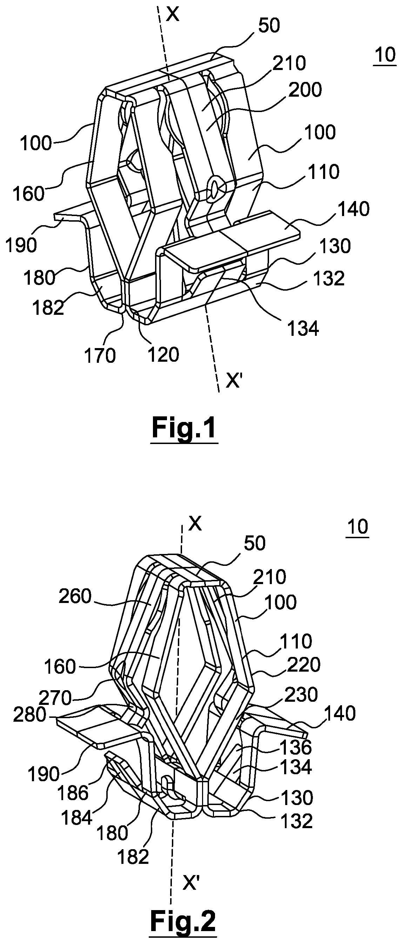

La Figure 1 montre une vue en perspective d'un dispositif de fixation selon un mode de réalisation de la présente invention. Le dispositif de fixation 10, appelé également clip, est destiné à fixer une première structure 600 sur une deuxième structure 800, les deux structures ayant respectivement une ouverture. Le clip 10 comporte au moins une première agrafe, dite agrafe de tension 100, et au moins une deuxième agrafe, dite agrafe d'arrachement 200, disposées respectivement sur deux plans essentiellement parallèles. Par « essentiellement parallèles », on entend que l'agrafe de tension 100 n'interfère pas avec l'agrafe d'arrachement 200, lorsque le clip 10 est en état libre ou monté sur les structures.

Selon un mode de réalisation de la présente invention, l'agrafe de tension 100 et l'agrafe d'arrachement 200 sont configurées de manière suivante :
- l'agrafe de tension 100 comporte deux sections de tension 110, 160 opposées et deux ailes 130, 180,
   - chaque section de tension 110, 160 comporte une portion de pliage,
   - chaque aile 130, 180 comporte une section de liaison 132, 182 permettant un débattement angulaire et/ou déversement et une section d'extrémité 140, 190,
      - chaque section de liaison 132, 182 comporte une languette 134, 184 dont l'extrémité libre 136, 186 s'étend vers la section d'extrémité 140, 190, de sorte à pouvoir retenir la deuxième structure 800 entre les languettes 134, 184 et les sections d'extrémité 140, 190,
- l'agrafe d'arrachement 200 comporte deux bras 210, 260 opposés,
   - les deux bras 210, 260 comportent chacun une section d'engagement 220, 270, et la section d'engagement 220, 270 étant apte à s'engager dans la première structure 600.

On va d'abord décrire un mode de réalisation non illustré selon lequel le clip 10 comporte une agrafe de tension 100 et une agrafe d'arrachement 200. D'abord, l'agrafe de tension 100 comporte deux sections de tension 110, 160 opposées et deux ailes 130, 180. Chaque section de tension 110, 160 s'étend dans une première direction d'un axe longitudinal XX' du dispositif de fixation 10 à partir d'une zone, appelée portion centrale 50. Ensuite, chaque section de tension 110, 160 s'étend vers l'extérieur à partir de l'axe longitudinal XX' et après vers l'axe longitudinal XX', ainsi formant une portion de pliage vers l'extérieur sur chaque section de tension 110, 160. Les deux ailes 130, 180 s'étendent, à partir des extrémités 120, 170 des sections de tension, l'une par rapport à l'autre en s'éloignant de l'axe longitudinal XX'.

Chaque aile 130, 180 comporte une section de liaison 132, 182 et une section d'extrémité 140, 190, la section d'extrémité s'étendant dans la première direction D, la section de liaison s'étendant dans une direction inverse à la première direction D et reliant la section de tension 110, 160 et la section d'extrémité 140, 190.

Chaque section de liaison 132, 182 comporte une languette 134, 184 qui comporte une extrémité libre 136, 186 s'étendant vers la section d'extrémité 140, 190, de sorte à pouvoir retenir la deuxième structure 800 entre les languettes 134, 184 et les sections d'extrémité 140, 190.

L'agrafe d'arrachement 200 comporte deux bras 210, 260 opposés s'étendant dans la première direction D à partir de la portion centrale 50.

Les deux bras 210, 260 comportent chacun une section d'engagement 220, 270 qui s'étend vers l'extérieur à partir de l'axe longitudinal XX' et après vers l'axe longitudinal XX', formant une portion de pliage, et la section d'engagement 220, 270 est apte à s'engager dans l'ouverture de la première structure 600.

Avantageusement, la section d'engagement 220, 270 est disposée plus loin de l'axe longitudinal XX' par rapport aux sections de tension 120, 170. Ceci permet de garantir et ajuster l'effort de tension et d'arrachement par l'agrafe d'arrachement, notamment entre le dispositif de fixation et la première structure.

Avantageusement, le clip 10 permet d'avoir un assemblage démontable de la première structure 600.

Dans le mode de réalisation illustré, le dispositif de fixation comporte une deuxième agrafe de tension 100, l'agrafe d'arrachement 200 se trouvant entre les deux agrafes de tension 100. Il est bien entendu que l'agrafe d'arrachement 20 n'interfère pas avec les deux agrafes de tension 100, lorsque le clip 10 est en état libre ou monté sur les structures à fixer. Ceci permet avantageusement d'augmenter l'effort de résistance.

La Figure 2 illustre une autre vue en perspective du dispositif de fixation 10 selon un mode de réalisation de la présente invention. On observe que chaque bras 210, 260 s'étend ensuite vers l'extérieur à partir de l'axe longitudinal XX', formant une portion de pliage 230, 280. Avantageusement, ces portions de pliage 230, 280 permettent d'éviter l'emmêlage des clips entre eux.

Dans un mode de réalisation préféré, les portions de pliage 230, 280, en état libre, par exemple lors du transport, viennent respectivement en butée contre les sections d'extrémité 140, 190. Ceci permet d'éviter l'ouverture et le retournement des sections d'extrémité 140, 190 et de garantir l'intégrité des bras 210, 260. Pour la distribution en automatique, le clip 10 peut être porté sur les sections d'extrémité 140, 190 avec la portion centrale en bas.

Dans un mode de réalisation préféré, le clip 10 est agencé de sorte que les bras 210, 260 ne passent pas par-dessus du trou 650 de la deuxième structure, lors de son utilisation. Avantageusement, ceci permet d'éviter le retournement les portions de pliage 230, 280, donc la détérioration du clip 10, lors du démontage de la structure 600. L'intégrité des bras 210, 260 est ainsi garantie.

Dans un autre mode de réalisation préféré, le mouvement des bras 210, 260 est limité de sorte qu'ils n'interfèrent pas avec les ailes 130, 180 lorsque le clip 10 est monté les structures à fixer. Avantageusement, le mouvement des bras 210, 260 est limité par la première structure, garantissant également l'intégrité des bras 210, 260.

Dans un mode de réalisation préféré, les sections de tension 120, 170 sont solidarisées avant de s'étendre en s'éloignant de l'axe longitudinal XX' et l'agrafe de tension 100 présente une forme fermée et concave. Ceci sera détaillé plus loin.

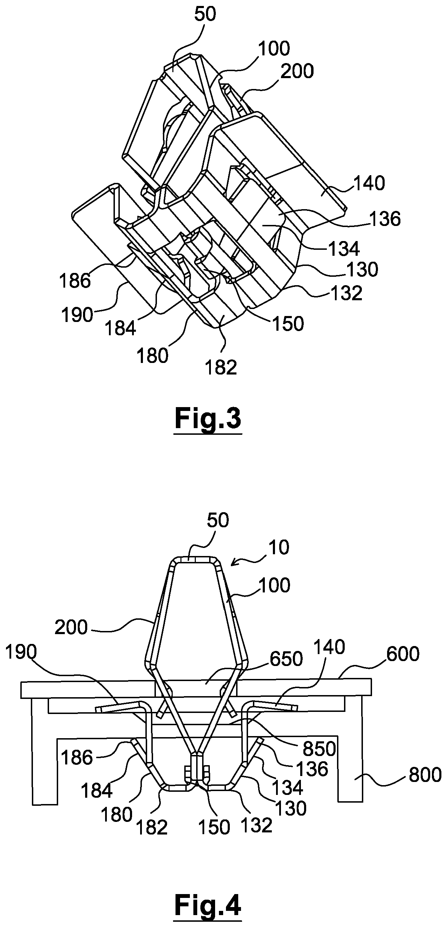

La Figure 3 montre une troisième vue en perspective du dispositif de fixation selon un mode de réalisation. Dans ce mode de réalisation, le clip 10 comporte deux agrafes de tension 100 séparées par l'agrafe d'arrachement 200. En revanche, on observe sur la Figure 3 que les deux agrafes de tension 100 sont reliées par les ailes 130, 180 de même côté. Avantageusement, ceci permet d'avoir une force de résistance du composant accrue. En fait, les agrafes 100, 200 sont liées par la portion centrale 50 d'un côté, et les deux agrafes de tension 100 sont solidarisé par les ailes 130, 180 d'autre côté.

Dans ce mode de réalisation illustré, la forme fermée de l'agrafe de tension 100 est réalisée par le clip même. Par exemple, le clip 10 présentent des plis de fermeture 150 permettant de solidariser les sections de tension 120, 170 pour avoir la forme fermée et concave.

Dans un mode de réalisation, le dispositif de fixation 10 est obtenu par pliage et/ou découpage à partir d'un élément monobloc de bande élastique.

Avantageusement, ceci permet d'avoir un clip de robustesse.

Dans un mode de réalisation non illustré, le clip 10 comporte en outre des moyens de verrouillage, tels que pion de verrouillage, supports, pour solidariser les sections de tension 120, 170.

Avantageusement, le fait d'avoir une forme fermée et concave permet de garder l'énergie de déformation et de garantir une tension d'assemblage. De plus, ceci permet d'éviter l'emmêlage des pièces entre elles et garantir la géométrie des pièces en limitant la déformation. En outre, ceci permet de dissocier les fonctions de clippage avec les deux structures à fixer.

La Figure 4 illustre une vue en coupe du dispositif de fixation 10 qui fixe une première structure 600 sur une deuxième structure 800 selon un mode de réalisation de la présente invention.

Le clip 10 est introduit dans la première structure 600, les sections de tension 110, 160 insérées dans l'ouverture 650. Avantageusement, les sections de tension 110, 160 permet de garantir le guidage pendant cette introduction.

Ensuite, le clip 10 est introduit dans la deuxième structure 800, les sections de liaison 132, 180 des ails 130, 180 passant à travers l'ouverture 850. Avantageusement, les languettes 134, 184 et les sections d'extrémité 140, 190 clippent respectivement sur les deux surfaces opposées de la deuxième structure 800, en garantissant une tension d'assemblage. De plus, le fait que les sections de liaison 132, 180 passent à travers l'ouverture 850 permet que le clip 10 est autocentré sur la deuxième structure 800.

Dans la mise en place en automatique, le clip 10 est monté dans la deuxième structure 800 par appuis sur la partie supérieure qui est opposée des ailes 130, 180.

Avantageusement, les sections de tension 110, 160 permet de garantir une tension d'assemblage et un effort d'arrachement vis-à-vis de la première structure 600, bien qu'il s'agisse d'un assemblage démontable de la première structure.

En parallèle, nous observons que la section d'engagement 220, 270 est disposée plus loin de l'axe longitudinal XX' par rapport aux sections de tension 120, 170. Ceci permet de garantir et ajuster l'effort de tension et d'arrachement par l'agrafe d'arrachement 100, entre le clip 10 et la première structure 600.

Selon l'invention, le clip 10 présente essentiellement une forme de V avec des sections de tension 110, 160. Dans la mise en place automatique, le clip 10 est préhensible sur la forme V par la tenue des parties latérales et des sections de tension 110, 160. Avantageusement, ceci permet de rattraper défaut d'alignement et de perpendicularité.

Dans un mode de réalisation, le dispositif de fixation 10 est essentiellement symétrique par rapport à un plan contenant l'axe longitudinal XX'. Dans un variant, l'agrafe de tension 100 et l'agrafe d'arrachement 200 présentent respectivement une symétrie par rapport à un plan contenant l'axe longitudinal. Dans un autre variant, les ailes 130, 180 est essentiellement symétrique par rapport à un plan contenant l'axe longitudinal XX'. Avantageusement, la force d'introduction/arrachement du clip 10 vis-à-vis des structures 600, 800 est équilibrée sur les deux côtés du clip 10.

Par la suite, on va montrer les autres avantages de la présente invention qui réside dans ses fonctions de rattrapage de jeu.

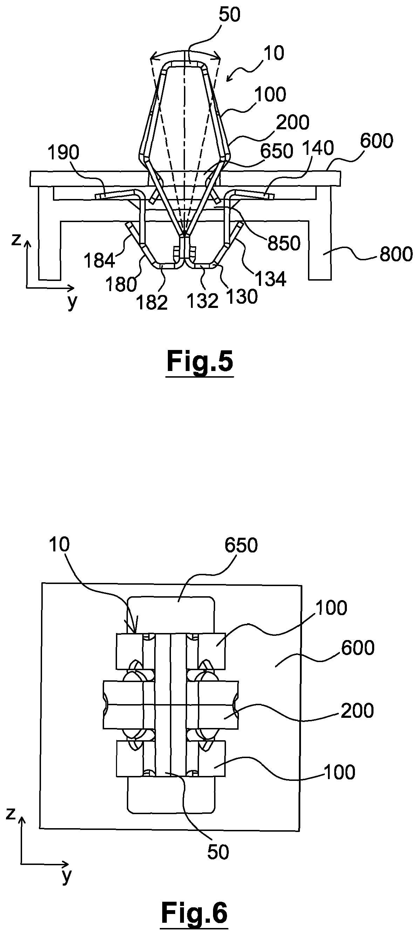

La Figure 5 illustre une vue en coupe du clip 10 qui fixe une première structure sur une deuxième structure selon un mode de réalisation. En fait, le rattrapage de jeu sur l'axe y est réalisé par le débattement angulaire et/ou déversement du clip 10 monté sur les deux structures 600, 800. Grace à la section de liaison 132, 138, le débattement angulaire et/ou déversement du clip 10 suivant l'axe de flexion et/ou autour l'axe X renforce avantageusement la robustesse de la fixation. Le rattrapage de jeu sur l'axe z est réalisé par les sections de tension 110, 160 de l'agrafe de tension 100 et par les bras 210, 260 de l'agrafe d'arrachement 200.

La Figure 6 montre une vue de dessus du dispositif de fixation de la Figure 5. Le clip 10 permet d'absorber le jeu le long de l'axe x. En effet, les structures 600 et/ou 800 peuvent se déplacer suivant l'axe x pour rattraper le jeu de montage de cette direction. Ainsi le rattrapage de jeu est réalisé par l'aménagement d'une ou des structures 600, 800.

Dans un autre mode de réalisation, la présente invention concerne un ensemble comportant une première structure 600 ayant une première ouverture 650 et une deuxième structure 800 ayant une deuxième ouverture 850. La première structure 600 est fixée à la deuxième structure 800 au moyen d'un clip 10 selon la présente invention.

Selon ce mode de réalisation, l'agrafe d'arrachement 200 est disposée à travers la première ouverture 650 de manière à ce que les deux bras 210, 260 sont engagés dans la première structure 600. De plus, les deux ailes 130, 180 sont disposées à travers la deuxième structure 850 de manière à ce que la deuxième structure 800 est retenue entre les languettes 134, 184 et les sections d'extrémité 140, 190.

Dans un mode de réalisation non illustré, la présente invention concerne un ensemble comportant une deuxième structure 800 ayant une deuxième ouverture 850 et un clip 10 selon la présente invention est monté sur La deuxième structure 800.

Selon ce mode de réalisation, les deux ailes 130, 180 sont disposées à travers la deuxième structure 850 de manière à ce que la deuxième structure 800 est retenue entre les languettes 134, 184 et les sections d'extrémité 140, 190.

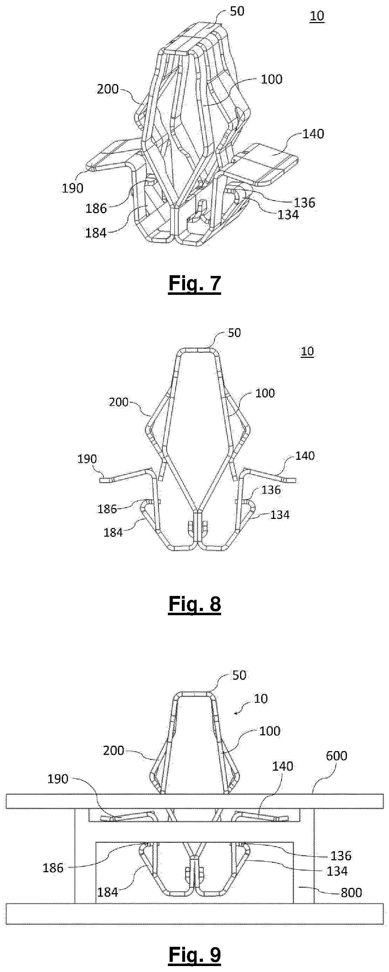

Des autres variantes de la présente invention sont illustrées avec les figures 7-9. Dans cette variante, chaque section de liaison 132, 182 comporte une languette 134, 184 qui comporte une extrémité libre 136, 186. Contrairement au mode de réalisation illustré par la figure 1, les deux extrémités libres 136, 186 s'étendent en s'approchant l'une vers l'autre et forment respectivement un retour. Avantageusement, la deuxième structure 800 est retenue entre les languettes 134, 184 et les sections d'extrémité 140, 190, comme illustre la figure 9. Dans un mode réalisation non illustré, une des extrémités libres 136, 186 s'étend vers la section d'extrémité 140, 190 de même côté par rapport à l'axe XX' et l'autre forme un retour.

Dans un mode de réalisation, lorsque la deuxième structure 800 est retenue entre les languettes 134, 184 et les sections d'extrémité 140, 190, au moins une des sections d'extrémité 140, 190 entrent en contact avec une surface de la deuxième structure 800. Avantageusement, ce contact est de type surface-à-surface pour avoir une surface de contact élevée. Ceci peut être également observé sur la figure 9.

### LISTE DES SIGNES DE RÉFÉRENCE

**[Tableaux 1]**

| Références | Désignations |
|---|---|
| 10 | Dispositif de fixation |
| 50 | Portion centrale |
| 100 | Agrafe de tension |
| 110, 160 | Section de tension |
| 120, 170 | Extrémité de section de tension |
| 130, 180 | Aile |
| 132, 182 | Section de liaison |
| 134, 184 | Languette |
| 136, 186 | Extrémité libre de languette |
| 140, 190 | Section d'extrémité |
| 200 | Agrafe d'arrachement |
| 210, 260 | Bras |
| 220, 270 | Section d'engagement |
| 230, 280 | Portion de pliage de section d'engagement |
| XX' | Axe longitudinal de dispositif de fixation |
| D | Première direction de l'axe longitudinal |
| 150 | plis de fermeture |

## Revendications

1. Dispositif de fixation (10), pour fixer une première structure (600) ayant une ouverture sur une deuxième structure (800) ayant une ouverture, comportant une première agrafe (100), dite agrafe de tension, et une deuxième agrafe (200), dite agrafe d'arrachement, disposées respectivement sur deux plans essentiellement parallèles,
- l'agrafe de tension (100) comporte deux sections de tension (110, 160) opposées et deux ailes (130, 180), le dispositif de fixation (10) présente essentiellement une forme de V avec les sections de tension (110, 160),
• chaque section de tension (110, 160) comporte une portion de pliage,
• chaque aile (130, 180) comporte une section de liaison (132, 182) permettant un débattement angulaire et/ou déversement et une section d'extrémité (140, 190),
∘ chaque section de liaison (132, 182) comporte une languette (134, 184) , de sorte à pouvoir retenir la deuxième structure (800) entre les languettes (134, 184) et les sections d'extrémité (140, 190),
- l'agrafe d'arrachement (200) comporte deux bras (210, 260) opposés,
• les deux bras (210, 260) comportent chacun une section d'engagement (220, 270), et la section d'engagement (220, 270) étant apte à s'engager dans la première structure (600).

2. Dispositif de fixation (10) selon la revendication 1, dans lequel
- chaque section de tension (110, 160) s'étend dans une première direction (D) suivant un axe longitudinal (XX') du dispositif de fixation (10) à partir d'une portion centrale (50); et
- chaque section de tension (110, 160) s'étend vers l'extérieur à partir de l'axe longitudinal (XX') et après vers l'axe longitudinal (XX'), formant ladite portion de pliage de la section de tension (110, 160).

3. Dispositif de fixation (10) selon la revendication 1 ou 2, dans lequel
- les deux ailes (130, 180) s'étendent, à partir des extrémités (120, 170) des sections de tension (110, 160) , l'une par rapport à l'autre en s'éloignant de l'axe longitudinal (XX'); et
- la section d'extrémité s'étend dans la première direction (D), la section de liaison s'étend dans une direction inverse à la première direction (D) et relie la section de tension (110, 160) et la section d'extrémité (140, 190).

4. Dispositif de fixation (10) selon l'une des revendications précédentes, dans lequel la section d'engagement (220, 270) s'étend vers l'extérieur à partir de l'axe longitudinal (XX') et après vers l'axe longitudinal (XX'), formant une portion de pliage.

5. Dispositif de fixation (10) selon l'une des revendications précédentes, dans lequel
- les deux bras (210, 260) de l'agrafe d'arrachement (200) opposés s'étendent dans la première direction (D) à partir de la portion centrale (50); et
- la section d'engagement (220, 270) est disposée plus loin de l'axe longitudinal (XX') par rapport aux sections de tension (120, 170).

6. Dispositif de fixation (10) selon la revendication 1, dans lequel chaque bras (210, 260) s'étend ensuite vers l'extérieur à partir de l'axe longitudinal (XX'), formant une portion de pliage (230, 280).

7. Dispositif de fixation (10) selon la revendication 6, dans lequel en état libre la portion de pliage (230, 280) vient en butée sur la section d'extrémité (140, 190).

8. Dispositif de fixation (10) selon l'une des revendication précédentes, **caractérisé en ce que** la section de liaison (132, 182) permet un débattement angulaire et/ou déversement du dispositif de fixation (10) suivant un axe de flexion et/ou autour un axe perpendiculaire à un plan contenant l'agrafe de tension (100) lorsqu'il est monté sur la deuxième structure.

9. Dispositif de fixation (10) selon l'une des revendication précédentes, **caractérisé en ce qu'**il comporte une deuxième agrafe de tension (100), l'agrafe d'arrachement (200) se trouvant entre les deux agrafes de tension (100).

10. Dispositif de fixation (10) selon la revendication 9, dans lequel, les deux agrafes de tension (100) sont reliées par les ailes (130, 180) de même côté.

11. Dispositif de fixation (10) selon l'une des revendications précédentes, dans lequel, les sections de tension (110, 160) sont solidarisées avant de s'étendre en s'éloignant de l'axe longitudinal (XX'), de sorte que les sections de tension (110, 160) et la portion centrale (50) forment une forme fermée et concave.

12. Dispositif de fixation (10) selon la revendication 11, dans lequel les sections de tension (110, 160) sont solidarisées par des plis de fermeture (150).

13. Dispositif de fixation (10) selon l'une des revendications précédentes, **caractérisé en ce qu'**il est obtenu par pliage et/ou découpage à partir d'un élément monobloc de bande élastique.

14. Dispositif de fixation (10) selon la revendication 11, dans lequel il comporte en outre des moyens de verrouillage pour solidariser les sections de tension (120, 170).

15. Ensemble comportant une première structure (600) ayant une première ouverture (650) et une deuxième structure (800) ayant une deuxième ouverture (850), **caractérisé en ce que**
- la première structure (600) est fixée à la deuxième structure (800) au moyen d'un dispositif de fixation (10) selon l'une des revendications précédentes 1 à 14;
- l'agrafe d'arrachement (200) est disposée à travers l'ouverture de la première structure (650) de manière à ce que les deux bras (210, 260) sont engagés dans la première structure (600); et
- les deux ailes (130, 180) sont disposées à travers l'ouverture de la deuxième structure (850) de manière à ce que la deuxième structure (800) est retenue entre les languettes (134, 184) et les sections d'extrémité (140, 190).

16. Ensemble comportant une deuxième structure (800) ayant une deuxième ouverture (850) et un dispositif de fixation (10) selon l'une des revendications précédentes 1 à 12, **caractérisé en ce que** les deux ailes (130, 180) sont disposées à travers la deuxième ouverture (850) de manière à ce que la deuxième structure (800) est retenue entre les languettes (134, 184) et les sections d'extrémité (140, 190).

## Patentansprüche

1. Befestigungsvorrichtung (10) zum Befestigen einer ersten Struktur (600), die eine Öffnung an einer zweiten Struktur (800) hat, die eine Öffnung hat, die eine erste Klammer (100), eine Spannklammer, und eine zweite Klammer (200), eine Abreißklammer, aufweist, die jeweils auf zwei im Wesentlichen parallelen Ebenen angeordnet sind,
- die Spannklammer (100) zwei gegenüberliegende Spannabschnitte (110, 160) und zwei Flügel (130, 180) aufweist, wobei die Befestigungsvorrichtung (10) im Wesentlichen eine V-Form mit den Spannabschnitten (110, 160) besitzt,
• jeder Spannabschnitt (110, 160) einen Faltabschnitt aufweist,
• jeder Flügel (130, 180) einen Verbindungsabschnitt (132, 182), der eine Winkelauslenkung und/oder Auskippung ermöglicht, und einen Endabschnitt (140, 190) aufweist,
∘jeder Verbindungsabschnitt (132, 182) eine Lasche (134, 184) aufweist, sodass die zweite Struktur (800) zwischen den Laschen (134, 184) und den Endabschnitten (140, 190) gehalten werden kann,
- die Abreißklammer (200) zwei gegenüberliegende Arme (210, 260) aufweist,
• die beiden Arme (210, 260) jeweils einen Eingriffsabschnitt (220, 270) aufweisen, und der Eingriffsabschnitt (220, 270) geeignet ist, in die erste Struktur (600) einzugreifen.

2. Befestigungsvorrichtung (10) nach Anspruch 1, wobei
- jeder Spannabschnitt (110, 160) sich in einer ersten Richtung (D) entlang einer Längsachse (XX') der Befestigungsvorrichtung (10) von einem Mittelabschnitt (50) aus erstreckt; und
- jeder Spannabschnitt (110, 160) sich von der Längsachse (XX') nach außen und dann zur Längsachse (XX') hin erstreckt, wodurch der Faltabschnitt des Spannabschnitts (110, 160) gebildet wird.

3. Befestigungsvorrichtung (10) nach Anspruch 1 oder 2, wobei
- die beiden Flügel (130, 180) sich von den Enden (120, 170) der Spannabschnitte (110, 160) weg von der Längsachse (XX') zueinander erstrecken; und
- der Endabschnitt sich in die erste Richtung (D) erstreckt, der Verbindungsabschnitt sich in eine entgegengesetzte Richtung zu der ersten Richtung (D) erstreckt und den Spannabschnitt (110, 160) und den Endabschnitt (140, 190) verbindet.

4. Befestigungsvorrichtung (10) nach einem der vorhergehenden Ansprüche, wobei sich der Eingriffsabschnitt (220, 270) von der Längsachse (XX') nach außen und anschließend zur Längsachse (XX') hin erstreckt und einen Faltabschnitt bildet.

5. Befestigungsvorrichtung (10) nach einem der vorstehenden Ansprüche, wobei:
- die beiden gegenüberliegenden Arme (210, 260) der Abreißklammer (200) sich in der ersten Richtung (D) vom Mittelabschnitt (50) aus erstrecken; und
- der Eingriffsabschnitt (220, 270) weiter von der Längsachse (XX') in Bezug auf die Spannabschnitte (120, 170) entfernt angeordnet ist.

6. Befestigungsvorrichtung (10) nach Anspruch 1, wobei sich danach jeder Arm (210, 260) von der Längsachse (XX') aus nach außen erstreckt und einen Faltabschnitt (230, 280) bildet.

7. Befestigungsvorrichtung (10) nach Anspruch 6, wobei der Faltabschnitt (230, 280) im freien Zustand an dem Endabschnitt (140, 190) anschlägt.

8. Befestigungsvorrichtung (10) nach einem der vorhergehenden Ansprüche, **dadurch gekennzeichnet, dass** der Verbindungsabschnitt (132, 182) eine Winkelauslenkung und/oder Auskippung der Befestigungsvorrichtung (10) entlang einer Biegeachse und/oder um eine Achse senkrecht zu einer Ebene ermöglicht, die die Spannklammer (100) enthält, wenn sie an der zweiten Struktur montiert ist.

9. Befestigungsvorrichtung (10) nach einem der vorhergehenden Ansprüche, **dadurch gekennzeichnet, dass** sie eine zweite Spannklammer (100) aufweist, wobei sich die Abreißklammer (200) zwischen den beiden Spannklammern (100) befindet.

10. Befestigungsvorrichtung (10) nach Anspruch 9, wobei die beiden Spannklammern (100) durch die Flügel (130, 180) auf derselben Seite verbunden sind.

11. Befestigungsvorrichtung (10) nach einem der vorhergehenden Ansprüche, wobei die Spannabschnitte (110, 160) verbunden sind, bevor sie sich von der Längsachse (XX') weg ausdehnen, so dass die Spannabschnitte (110, 160) und der Mittelabschnitt (50) eine geschlossene und konkave Form bilden.

12. Befestigungsvorrichtung (10) nach Anspruch 11, wobei die Spannabschnitte (110, 160) durch Verschlussfalten (150) verbunden sind.

13. Befestigungsvorrichtung (10) nach einem der vorhergehenden Ansprüche, **dadurch gekennzeichnet, dass** sie durch Biegen und/oder Schneiden aus einem einteiligen elastischen Bandelement hergestellt wird.

14. Befestigungsvorrichtung (10) nach Anspruch 11, wobei sie ferner Verriegelungsmittel zum Verbinden der Spannabschnitte (120, 170) umfasst.

15. Baugruppe, die eine erste Struktur (600), die eine erste Öffnung (650), und eine zweite Struktur (800), die eine zweite Öffnung (850), aufweist, **dadurch gekennzeichnet, dass**
- die erste Struktur (600) mittels einer Befestigungsvorrichtung (10) nach einem der vorhergehenden Ansprüche 1 bis 14 an der zweiten Struktur (800) befestigt ist;
- die Abreißklammer (200) durch die Öffnung der ersten Struktur (650) so angeordnet ist, dass die beiden Arme (210, 260) in die erste Struktur (600) eingreifen; und
- die beiden Flügel (130, 180) durch die Öffnung der zweiten Struktur (850) so angeordnet sind, dass die zweite Struktur (800) zwischen den Laschen (134, 184) und den Endabschnitten (140, 190) gehalten wird.

16. Baugruppe, die eine zweite Struktur (800), die eine zweite Öffnung (850), und eine Befestigungsvorrichtung (10) nach einem der vorhergehenden Ansprüche 1 bis 12 aufweist, **dadurch gekennzeichnet, dass** die beiden Flügel (130, 180) durch die zweite Öffnung (850) so angeordnet sind, dass die zweite Struktur (800) zwischen den Laschen (134, 184) und den Endabschnitten (140, 190) gehalten wird.

## Claims

1. A fastening device (10), for fastening a first structure (600) having an opening to a second structure (800) having an opening, comprising a first clip (100), referred to as tension clip, and a second clip (200), referred to as pull-off clip, respectively disposed on two essentially parallel planes,
- the tension clip (100) comprises two opposite tension sections (110, 160) and two wings (130, 180), the fastening device (10) essentially has a V-shape with the tension sections (110, 160),
• each tension section (110, 160) comprises a bending portion,
• each wing (130, 180) comprises a linking section (132, 182) allowing angular displacement and/or tilting and an end section (140, 190),
• each linking section (132, 182) comprises a tab (134, 184), so as to be able to hold the second structure (800) between the tabs (134, 184) and the end sections (140, 190),
- the pull-off clip (200) comprises two opposite arms (210, 260),
• the two arms (210, 260) each comprise an engagement section (220, 270), and the engagement section (220, 270) being capable of being engaged in the first structure (600).

2. The fastening device (10) according to claim 1, wherein
- each tension section (110, 160) extends in a first direction (D) along a longitudinal axis (XX') of the fastening device (10) from a central portion (50); and
- each tension section (110, 160) extends outward from the longitudinal axis (XX') and then toward the longitudinal axis (XX'), forming said bending portion of the tension section (110, 160).

3. The fastening device (10) according to claim 1 or 2, wherein
- the two wings (130, 180) extend, from the ends (120, 170) of the tension sections (110, 160), relative to each other away from the longitudinal axis (XX'); and
- the end section extends in the first direction (D), the linking section extends in an opposite direction to the first direction (D) and connects the tension section (110, 160) and the end section (140, 190).

4. The fastening device (10) according to any one of the preceding claims, wherein the engagement section (220, 270) extends outward from the longitudinal axis (XX') and then toward the longitudinal axis (XX'), forming a bending portion.

5. The fastening device (10) according to any one of the preceding claims, wherein
- the two opposite arms (210, 260) of the pull-off clip (200) extend in the first direction (D) from the central portion (50); and
- the engagement section (220, 270) is disposed farther from the longitudinal axis (XX') relative to the tension sections (120, 170).

6. The fastening device (10) according to claim 1, wherein each arm (210, 260) then extends outward from the longitudinal axis (XX'), forming a bending portion (230, 280).

7. The fastening device (10) according to claim 6, wherein, in the free state, the bending portion (230, 280) abuts on the end section (140, 190).

8. The fastening device (10) according to one of the preceding claims, **characterized in that** the linking section (132, 182) allows angular displacement and/or tilting of the fastening device (10) along a bending axis and/or about an axis perpendicular to a plane containing the tension clip (100) when it is mounted on the second structure.

9. The fastening device (10) according to one of the preceding claims, **characterized in that** it comprises a second tension clip (100), the pull-off clip (200) being located between the two tension clips (100).

10. The fastening device (10) according to claim 9, wherein the two tension clips (100) are connected by the wings (130, 180) of the same side.

11. The fastening device (10) according to one of the preceding claims, wherein the tension sections (110, 160) are secured before extending away from the longitudinal axis (XX'), such that the tension sections (110, 160) and the central portion (50) form a closed concave shape.

12. The fastening device (10) according to claim 11, wherein the tension sections (110, 160) are secured by closing laps (150).

13. The fastening device (10) according to one of the preceding claims, **characterized in that** it is obtained by bending and/or cutting from a one-piece elastic strip element.

14. The fastening device (10) according to claim 11, wherein it further comprises locking means for securing the tension sections (120, 170).

15. An assembly comprising a first structure (600) having a first opening (650) and a second structure (800) having a second opening (850), **characterized in that**
- the first structure (600) is fastened to the second structure (800) by means of a fastening device (10) according to one of the preceding claims 1 to 14;
- the pull-off clip (200) is disposed through the opening of the first structure (650) such that the two arms (210, 260) are engaged in the first structure (600); and
- the two wings (130, 180) are disposed through the opening of the second structure (850) such that the second structure (800) is held between the tabs (134, 184) and the end sections (140, 190).

16. An assembly comprising a second structure (800) having a second opening (850) and a fastening device (10) according to one of the preceding claims 1 to 12, **characterized in that** the two wings (130, 180) are disposed through the second opening (850) such that the second structure (800) is held between the tabs (134, 184) and the end sections (140, 190).
